# EUROPÄISCHE PATENTANMELDUNG

(11) **EP 2 647 870 A2**
(43) Veröffentlichungstag der Anmeldung: **09.10.2013**
(21) Anmeldenummer: 13000998.8
(22) Anmeldetag: 27.02.2013
(51) Int. Cl.: F16F 13/26

(54) **Hydrolager**

(30) Priorität: 04.04.2012 DE 102012006752
(71) Anmelder: Carl Freudenberg KG, 69469 Weinheim (DE)
(72) Erfinder: Hirsch, Volker, 67346 Speyer (DE); Schillinger, Michael, 69469 Weinheim (DE)

(57) **Zusammenfassung**

Hydrolager, umfassend ein Traglager (1) und ein Auflager (2), die durch einen im Wesentlichen hohlkegelförmig ausgebildeten Federkörper (3) aus gummielastischem Werkstoff aufeinander abgestützt sind und einen Arbeitsraum (4) und einen Ausgleichsraum (5) begrenzen, die mit Dämpfungsflüssigkeit (6) gefüllt und auf ihren einander axial zugewandten Seiten durch eine Trennwand (7) voneinander getrennt sind, wobei die Trennwand (7) zur Isolierung höherfrequenter kleinamplitudiger Schwingungen eine Membran (8) umfasst, die schwingfähig zwischen Arbeitsraum (4) und Ausgleichsraum (5) angeordnet ist, wobei der Arbeitsraum (4) und der Ausgleichsraum (5) zur Dämpfung niederfrequenter großamplitudiger Schwingungen durch einen Dämpfungskanal (9) flüssigkeitsleitend miteinander verbunden sind. Innerhalb des Arbeitsraums (4) oder des Ausgleichsraums (5) ist eine strömungsführende Trennplatte (10) angeordnet und mittels einer Schaltvorrichtung (11) zur Membran (8) funktionstechnisch in Reihe schaltbar.

## Beschreibung

### Technisches Gebiet

Die Erfindung betrifft ein Hydrolager, umfassend ein Traglager und ein Auflager, die durch einen im Wesentlichen hohlkegelförmig ausgebildeten Federkörper aus gummielastischem Werkstoff aufeinander abgestützt sind und einen Arbeitsraum und einen Ausgleichsraum begrenzen, die mit Dämpfungsflüssigkeit gefüllt und auf ihren einander axial zugewandten Seiten durch eine Trennwand voneinander getrennt sind, wobei die Trennwand zur Isolierung höherfrequenter kleinamplitudiger Schwingungen eine Membran umfasst, die schwingfähig zwischen Arbeitsraum und Ausgleichsraum angeordnet ist, wobei der Arbeitsraum und der Ausgleichsraum zur Dämpfung niederfrequenter großamplitudiger Schwingungen durch einen Dämpfungskanal flüssigkeitsleitend miteinander verbunden sind.

### Stand der Technik

Ein solches Hydrolager ist allgemein bekannt.
Durch das vorbekannte Hydrolager werden zum Beispiel eine Verbrennungskraftmaschine und eine Kraftfahrzeugkarosserie miteinander verbunden, wobei die von der Verbrennungskraftmaschine in die Kraftfahrzeugkarosserie eingeleiteten Schwingungen möglichst weitgehend reduziert werden sollen.

Zur Funktion wird im Wesentlichen folgendes ausgeführt:

Höherfrequente kleinamplitudige Schwingungen, wie sie beispielsweise durch Vibrationen der im Betrieb befindlichen Verbrennungskraftmaschine entstehen, werden dadurch vom Fahrzeug isoliert, dass sich die Membran in der Trennwand gleichphasig mit den eingeleiteten Schwingungen bewegt, so dass diese nur in abgeschwächter Form weitergeleitet werden.
Durch das Ausweichen der Membran wird ein Druckanstieg im Arbeitsraum des Hydrolagers vermieden. Ein solcher Druckanstieg würde sonst zu einem unerwünschten steiferen Verhalten des Hydrolagers führen. Die Hydraulik ist in diesem Bewegungszustand abgeschaltet.
Niederfrequente großamplitudige Schwingungen, wie sie beispielsweise beim Anlassen oder Abstellen der Verbrennungskraftmaschine entstehen, werden dadurch gedämpft, dass die in dem Dämpfungskanal enthaltene Masse von Dämpfungsflüssigkeit zwischen dem Arbeitsraum und dem Ausgleichsraum phasenverschoben zu den eingeleiteten Schwingungen hin und her schwingt und dadurch die eingeleiteten Schwingungen dämpft.
Während der Isolierung der höherfrequenten kleinamplitudigen Schwingungen ist der Dämpfungskanal hydraulisch aufgrund der zu großen Trägheitswirkung der im Kanal befindlichen Masse der Dämpfungsflüssigkeit ohne Funktion; während der Dämpfung niederfrequenter großamplitudiger Schwingungen ist demgegenüber die Membran hydraulisch blockiert.

Aus der DE 2007 054 882 A1 ist ein solches Hydrolager bekannt. Zusätzlich zu der Membran weist dieses Hydrolager eine strömungsführende Einrichtung auf, die in einer funktionstechnischen Reihenschaltung zu der Membran angeordnet ist. Diese strömungsführende Einrichtung ist benachbart zu der Membran im Ausgleichsraum angeordnet und kann beispielsweise als zylindrischer Kanal ausgebildet sein und einen siebartigen Boden aufweisen.
Durch die strömungsführende Einrichtung können Schwingungen einer bestimmten höheren Frequenz durch eine Absenkung der dynamischen Steifigkeit bei dieser Frequenz isoliert werden.
Dieses sehr einfach aufgebaute Hydrolager ermöglicht keine Anpassung an unterschiedliche Betriebszustände der Verbrennungskraftmaschine, da die höhere Frequenz, bei der die Absenkung der dynamischen Steifigkeit erreicht wird, fest eingestellt ist.

### Darstellung der Erfindung

Der Erfindung liegt die Aufgabe zugrunde, ein Hydrolager der vorbekannten Art derart weiterzuentwickeln, dass es an unterschiedliche Betriebszustände der abgestützten Verbrennungskraftmaschine angepasst werden kann, insbesondere dass eine unerwünschte Erhöhung der dynamischen Steifigkeit in einem möglichst breiten Frequenzbereich oder in mehreren getrennten Frequenzbereichen vermieden wird.
Außerdem soll das Hydrolager einen einfachen Aufbau aufweisen und dadurch in fertigungstechnischer und wirtschaftlicher Hinsicht einfach und kostengünstig herstellbar sein.

Diese Aufgabe wird erfindungsgemäß mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist ein Hydrolager vorgesehen, bei dem innerhalb des Arbeitsraums oder des Ausgleichsraums eine strömungsführende Trennplatte angeordnet und mittels einer Schaltvorrichtung zur Membran funktionstechnisch in Reihe schaltbar ist.

Hierbei ist von Vorteil, dass durch die Schaltbarkeit der Trennplatte eine Anpassung der Funktion des Hydrolagers an unterschiedliche Betriebszustände der Verbrennungskraftmaschine, die auf dem Hydrolager abgestützt ist, vorgenommen werden kann. Im Gegensatz zu dem zuvor beschriebenen, aus dem Stand der Technik bekannten Hydrolager, sind die Gebrauchseigenschaften des erfindungsgemäßen Hydrolagers während des Betriebs einstellbar. Diese Einstellung erfolgt jedoch nicht wie bei anderen vorbekannten Hydrolagern, die kontinuierlich verstellbar sind, durch eine aufwändige Wegsensierung und -regelung im Verstellmechanismus, die deswegen kompliziert und teuer sind, sondern durch die Trennplatte, die zur Membran funktionstechnisch in Reihe schaltbar ist. Diese Konstruktion ist insgesamt sehr einfach, wobei die Trennplatte durch einen einfachen herkömmlichen Schaltmechanismus geschaltet werden kann. Abhängig vom Schaltzustand der Trennplatte, verändern sich die Gebrauchseigenschaften des Hydrolagers.
Es ist von hervorzuhebendem Vorteil, dass zum Beispiel ein Standard-Hydrolager auf einfache Weise durch nur geringfügige konstruktive Änderungen durch die Trennplatte ergänzt werden kann, um dadurch einfach und kostengünstig ein Hydrolager zu erhalten, das gut an unterschiedliche Betriebszustände einer Verbrennungskraftmaschine angepasst werden kann.

Durch das erfindungsgemäße Hydrolager sind zwei Betriebszustände möglich. Ist die Trennplatte zur Membran funktionstechnisch in Reihe geschaltet, das heißt relativ zur Trennwand arretiert, strömt die Dämpfungsflüssigkeit bei Schwingungsbewegungen der Membran durch die Trennplatte. Entscheidend für die Ausbildung der Tilgerwirkung ist das sehr hohe hydraulische Übersetzungsverhältnis, das dadurch erreicht wird, dass die Trennplatte von der Dämpfungsflüssigkeit nur über einen deutlich reduzierten Strömungsquerschnitt durchströmbar ist. Es stellt sich dadurch eine Tilgerwirkung bei relativ niedriger Frequenz, zum Beispiel kleiner 100 Hz ein.

Ist die Trennplatte demgegenüber relativ zur Trennwand nicht-arretiert, also frei beweglich geschaltet, kann die Trennplatte im Arbeitsraum oder im Ausgleichsraum im Wesentlichen frei schwingen und ist somit quasi unwirksam, In dieser Situation ist das hydraulische Übersetzungsverhältnis der Offenfläche der Membran relevant für die Tilgerwirkung, die daher bei einer relativ höheren Frequenz, zum Beispiel größer 100 Hz auftritt.

Die Trennplatte kann von Durchbrechungen durchdrungen sein, wobei die Durchbrechungen von der Dämpfungsflüssigkeit durchströmbar sind.

Anstelle der Durchbrechungen können Ausnehmungen am Rand der Trennplatte angeordnet sein, die schlitzförmig ausgebildet sind und sich in radialer Richtung erstrecken.

Die Größe und Anzahl der Durchbrechungen oder Ausnehmungen haben Einfluss auf die Gebrauchseigenschaften des Hydrolagers, wenn die Trennplatte zu der Membran funktionstechnisch in Reihe geschaltet ist. Durch die Größe der Durchbrechungen oder Ausnehmungen und/oder deren Anzahl kann die Frequenz bestimmt werden, bei der sich eine Absenkung der dynamischen Steifigkeit des Hydrolagers einstellt.

Für viele Anwendungsfälle ist es vorteilhaft, wenn die Durchbrechungen gleichmäßig verteilt in der Trennplatte angeordnet sind. Die Durchbrechungen können sich in Umfangsrichtung im Bereich des Außenumfangs der Trennplatte erstrecken. Die Durchbrechungen können beispielsweise als Bohrungen ausgebildet sein. Bohrungen sind einfach und kostengünstig herstellbar.

Eine Trennplatte, die die zuvor beschriebenen Ausnehmungen aufweist, hat den Vorteil, dass die Herstellung noch einfacher als die Herstellung mit den Durchbrechungen sein kann, da zum Beispiel ein zusätzliches Bohren entfällt. Insbesondere können die Ausnehmungen von Vorteil sein, wenn die Fläche sehr klein gestaltet sein muss, um die gewünschte Frequenz der Tilgerwirkung einzustellen.

Ist die Trennplatte zur Membran in Reihe geschaltet, also relativ zur Trennwand arretiert, durchströmt die Dämpfungsflüssigkeit die Durchbrechungen oder Ausnehmungen zum Beispiel bis zu einer Frequenz der eingeleiteten Schwingungen, von etwa 100 Hz. Bis zu dieser Frequenz, also bei niedrigen Drehzahlen der Verbrennungskraftmaschine, ergibt sich durch die Durchströmung der Durchbrechungen oder Ausnehmungen mit Dämpfungsflüssigkeit eine Reduzierung der dynamischen Steifigkeit, so dass durch das relativ weiche Hydrolager die genannten Schwingungen besonders wirkungsvoll von der Fahrzeugkarosserie ferngehalten werden.
Würde diese Arretierung der Trennplatte relativ zur Trennwand bei ansteigender Frequenz der in das Hydrolager eingeleiteten Schwingungen, also bei höheren Drehzahlen der Verbrennungskraftmaschine, nicht gelöst, würde sich ein unerwünscht steiler Anstieg der dynamischen Steifigkeit und damit eine unerwünschte Verhärtung des Hydrolagers ergeben; diese Schwingungen würden in das Kraftfahrzeug übertragen, wodurch auch eine Geräuschbelästigung bedingt wäre. Um das zu verhindern, kann die Trennplatte folglich bei etwa 100 Hz mittels der Schaltvorrichtung von der Trennwand freigeschaltet werden, so dass sich die Trennplatte praktisch frei innerhalb des Arbeitsraums oder des Ausgleichsraums bewegen kann und dadurch praktisch ohne Funktion ist. Das Hydrolager weist dadurch eine gute Tilgerwirkung auch bei höheren Frequenzen auf, zum Beispiel bis zu einer Frequenz von etwa 150 Hz.
Für Fahrzeuge mit 4.-Zylinder-Dieselmator ist ein wie zuvor beschrieben ausgeführtes Hydrolager besonders vorteilhaft, weil das Hydrolager durch die schaltbare Trennplatte in einem Frequenzbereich bis etwa 150 Hz, was etwa einer Motordrehzahl von 4500 min⁻¹ entspricht, eine geringe dynamische Steifigkeit aufweist, das heißt weich ist und solche Schwingungen in diesem Frequenzbereich deshalb besonders gut tilgt.

Eine gleichmäßige Verteilung der Durchbrechungen oder eine gleichmäßige Verteilung der Ausnehmungen auf der Trennplatte ist einfach und kostengünstig herstellbar.

Die Trennplatte kann ein Gewicht aufweisen, das dem Gewicht der von der Trennplatte verdrängten Dämpfungsflüssigkeit im Wesentlichen entspricht. Hierbei ist von Vorteil, dass die Trennplatte eine Dichte wie die umgebende Dämpfungsflüssigkeit aufweist und sich deshalb frei in dieser bewegen, also mit dieser schwingen kann. Ist eine solche Trennplatte frei beweglich innerhalb des Arbeitsraums oder des Ausgleichsraums angeordnet, ist sie quasi unwirksam.

Die Trennplatte und die Membran können einen im Wesentlichen übereinstimmenden Durchmesser aufweisen. Im Hinblick auf die Verwendung möglichst vieler Gleichteile ist eine solche Ausgestaltung von Vorteil. Zum Beispiel besteht die Möglichkeit, gleiche Anschläge vorzusehen, die sowohl außenumfangsseitig an der Membran als auch außenumfangsseitig an der Trennplatte passen.
Durch den vergleichsweise großen Durchmesser der Trennplatte wird eine größere Gestaltungsfreiheit bezüglich der Ausgestaltung und Anordnung der Durchbrechungen oder Ausnehmungen erreicht, so dass eine einfache Anpassung der Gebrauchseigenschaften des Hydrolagers an die jeweilige Verbrennungskraftmaschine erfolgen kann.

Die Trennplatte kann mittels der Schaltvorrichtung im Arbeitsraum oder im Ausgleichsraum bedarfsweise arretierbar sein. Durch eine solche Arretierung ist die Trennplatte, bezogen auf die Trennwand, ortsfest, so dass von der Membran verdrängte Dämpfungsflüssigkeit durch die Durchbrechungen oder die Ausnehmungen der Trennplatte hindurchgedrückt wird. Dadurch wird eine Verschiebung in der Frequenz der Tilgerwirkung und der Absenkung der dynamischen Steifigkeit des Hydrolagers in einen niedrigeren Frequenzbereich erreicht.

Die Trennplatte kann durch zumindest ein elastisches Verbindungselement mit der Trennwand verbunden sein. Hierbei ist von Vorteil, dass die Trennplatte im Fluid besser frei beweglich ist. Da sich eine exakte Dichte der Trennplatte, die absolut identisch zur Dichte des Fluids ist, nur schwer erreichen lässt, und damit die Trennplatte tendenziell entweder nach oben schwimmt oder nach unten absinkt, ist eine solche elastische Aufhängung der Trennplatte von Vorteil. Sie nimmt die Gewichtsdifferenz durch die Federkraft des elastischen Verbindungselements auf und erhält somit die Trennplatte auf einer ausreichenden Distanz zu den Anschlägen beziehungsweise zur Abschlussmembran.

Nach einer vorteilhaften Ausgestaltung ist es vorgesehen, dass das Verbindungselement zumindest drei über den Umfang der Trennplatte verteilt angeordnete Stege umfasst, deren erster Anlenkpunkt an der Trennplatte und deren zweiter Anlenkpunkt an der Trennwand festgelegt ist.

Die Stege weisen bevorzugt eine sehr weiche Federkennung auf, derart, dass die Beweglichkeit der Trennplatte um ihre axiale Mittellage in ihrem Einbauraum nicht behindert ist.

Die Trennplatte kann mittels der Schaltvorrichtung ortsfest an der Trennwand festlegbar sein.

Die Trennplatte kann mittels der Schaltvorrichtung im Arbeitsraum oder im Ausgleichsraum bedarfsweise freischaltbar sein. Wenn die Trennplatte im

Arbeitsraum oder im Ausgleichsraum freigeschaltet ist, kann sie sich, wie zuvor beschrieben, frei im Arbeitsraum oder im Ausgleichsraums bewegen, ist dadurch quasi unwirksam, so dass sich das Hydrolager verhält, wie ein Hydrolager ohne diese Trennplatte.

Sehr einfach ist es, wenn die Trennplatte grundsätzlich frei beweglich ist und durch eine Arretiervorrichtung an einen Anschlag gedrückt werden kann; die Trennplatte ist dann arretiert.

Die Trennplatte und die Schaltvorrichtung können im Ausgleichsraum angeordnet sein, wobei die Schaltvorrichtung einen pneumatischen Antrieb, eine Feder und einen Schaltstempel umfassen kann. Eine solche Schaltvorrichtung hat einen einfachen Aufbau. Ein pneumatischer Antrieb der Schaltvorrichtung bietet sich in Kraftfahrzeugen deshalb an, weil Unterdruck oder Überdruck zur Betätigung des pneumatischen Antriebs in Kraftfahrzeugen ohnehin vorhanden ist.
Unterdruck kann zum Beispiel vom Ansaugsystem einer Verbrennungskraftmaschine abgezweigt werden, Überdruck ist zum Beispiel bei Kraftfahrzeugen mit Luftfedern ohnehin vorhanden.

Der pneumatische Antrieb kann gegen die Federkraft der Feder wirksam sein. Die Schaltvorrichtung ist dadurch konstruktiv einfach. Immer dann, wenn der pneumatische Antrieb nicht aktiviert ist, bewegt sich der Schaltstempel durch die Federkraft der Feder in eine Ausgangsstellung.

Der Schaltstempel und die Feder können miteinander verbunden sein, wobei der Schaltstempel zur Schaltung der Trennplatte durch die Schaltvorrichtung an diese anlegbar oder von dieser lösbar ist. Durch den Schaltstempel wird die Trennplatte an der Trennwand arretiert, um eine Absenkung der dynamischen Steifigkeit in dem gewünschten niedrigeren Frequenzbereich zu erreichen. Wird der Schaltstempel demgegenüber von der Trennplatte gelöst und diese ist innerhalb des Ausgleichsraums frei beweglich, wird eine unerwünschte Verhärtung der dynamischen Steifigkeit in einem Frequenzbereich, der höher liegt, als der zuvor beschriebene, vermieden und eine Absenkung der dynamischen Steifigkeit in einem höheren Frequenzbereich erreicht.

Nach einer ersten Ausgestaltung kann der pneumatische Antrieb durch Unterdruck betätigbar sein. Der Schaltstempel kann durch Betätigung der Schaltvorrichtung von der Trennplatte lösbar sein. Dadurch ist auch die Trennplatte von der Trennwand gelöst Ist demgegenüber kein Unterdruck angelegt, wird die Trennplatte durch die Federkraft der Feder und mittels des Schaltstempels an der Trennwand anliegend arretiert.

Nach einer zweiten Ausgestaltung kann es vorgesehen sein, dass der pneumatische Antrieb durch Überdruck betätigbar ist. Bei einer solchen Ausgestaltung ist es so, dass der Schaltstempel durch Betätigung der Schaltvorrichtung an die Trennplatte anlegbar ist. Die Trennplatte ist dadurch an der Trennwand arretiert. Ist der pneumatische Antrieb demgegenüber nicht mit Überdruck beaufschlagt, bewegt die Federkraft der Feder den Schaltstempel von der Trennplatte weg, so dass diese frei innerhalb des Ausgleichsraums beweglich ist.

Die Feder kann aus einem elastomeren Werkstoff bestehen und bei arretierter Trennplatte im Wesentlichen hohlkegelförmig ausgebildet sein. Eine solche Feder arbeitet geräuscharm und ist einfach und kostengünstig herstellbar. Die Federkraft kann durch die Ausgestaltung der Feder besonders einfach an die jeweiligen Gegebenheiten des Anwendungsfalles, insbesondere an den pneumatischen Antrieb und/oder die Charakteristik der Schaltvorrichtung angepasst werden.

Die Schaltvorrichtung kann einen elektrischen Antrieb umfassen und zum Beispiel durch einen Elektromagneten oder einen Elektromotor mit einem Getriebe betätigt werden. Auch hier kann der Antrieb der Schaltvorrichtung mit einer Feder kombiniert werden, so dass der Antrieb durch die Federkraft in einer Ausgangsposition gedrückt wird. Durch Einschalten des Stroms kann dann der Antrieb die andere Schaltstellung anfahren.

Die Trennplatte kann kraftschlüssig oder formschlüssig an der Trennwand arretierbar sein. Hierbei ist von Vorteil, dass der hierfür erforderliche Arretiertmechanismus sehr klein und einfach ist, zum Beispiel als Hubmagnet ausgeführt werden kann und nur kleine Verstellwege verfahren muss.
Bei einer formschlüssigen Arretierung sind die Arretiertkräfte noch geringer als bei einer kraftschlüssigen, da keine hohen Reibkräfte erzeugt werden müssen.

Die Membran und/oder die Trennplatte können jeweils einen Anschlag aus gummielastischem Werkstoff aufweisen. Die Anschläge an der Membran und/oder der Trennplatte sind vorgesehen, um ein ruckartiges Anschlagen der Bauteile und damit verbundene Geräusche während der bestimmungsgemäßen Verwendung des Hydrolagers zu vermeiden.

Gemäß einer vorteilhaften Ausgestaltung kann es vorgesehen sein, dass die Anschläge von Membran und/oder Trennplatte jeweils außenumfangsseitig angeordnet sind. Zumindest die außenumfangsseitigen Anschläge von Membran und Trennplatte können als Gleichteile ausgebildet sein. Die Kosten zur Herstellung des Hydrolagers werden dadurch reduziert.

Das Hydrolager kann als Rundlager oder als Kastenlager ausgebildet sein.

### Kurzbeschreibung der Zeichnung

Fünf Ausführungsbeispiele des erfindungsgemäßen Hydrolagers sind nachfolgend anhand der Figuren 1 bis 9 näher beschrieben. Diese zeigen jeweils in schematischer Darstellung:
- Fig. 1: ein erstes Ausführungsbeispiel des Hydrolagers, bei dem der pneumatische Antrieb durch Unterdruck betätigbar ist, wobei die Trennplatte im Ausgleichsraum angeordnet ist,
- Fig. 2: ein zweites Ausführungsbeispiel des Hydrolagers, bei dem der pneumatische Antrieb durch Überdruck betätigbar ist, wobei die Trennplatte im Ausgleichsraum angeordnet ist,
- Fig. 3: ein drittes Ausführungsbeispiel eines Hydrolagers, bei dem die Schaltvorrichtung einen elektrischen Antrieb und eine reibschlüssige Arretierung der Trennplatte umfasst und wobei die Trennplatte im Arbeitsraum angeordnet ist,
- Fig. 4: ein viertes Ausführungsbeispiel eines Hydrolagers, bei dem die Schaltvorrichtung einen elektrischen Antrieb und eine formschlüssig Arretierung der Trennplatte umfasst und wobei die Trennplatte im Arbeitsraum angeordnet ist,
- Fig. 5: ein erstes Beispiel einer Trennplatte, wie sie in den Ausführungsbeispielen zur Anwendung gelangen kann, in einer Draufsicht,
- Fig. 6: ein zweites Ausführungsbeispiel einer Trennplatte, wie sie in den Ausführungsbeispielen zur Anwendung gelangen kann, in einer Draufsicht,
- Fig. 7: ein drittes Ausführungsbeispiel einer Trennplatte, wie sie in den Ausführungsbeispielen zur Anwendung gelangen kann, in einer Draufsicht,
- Fig. 8: ein fünftes Ausführungsbeispiel des Hydrolagers mit pneumatischem Antrieb, wobei die Trennplatte im Ausgleichsraum angeordnet ist,
- Fig. 9: ein Diagramm, bei dem die dynamische Steifigkeit der Hydrolager aus den Figuren 1, 2, 3, 4 und 8 über der Frequenz aufgetragen ist.

### Ausführung der Erfindung

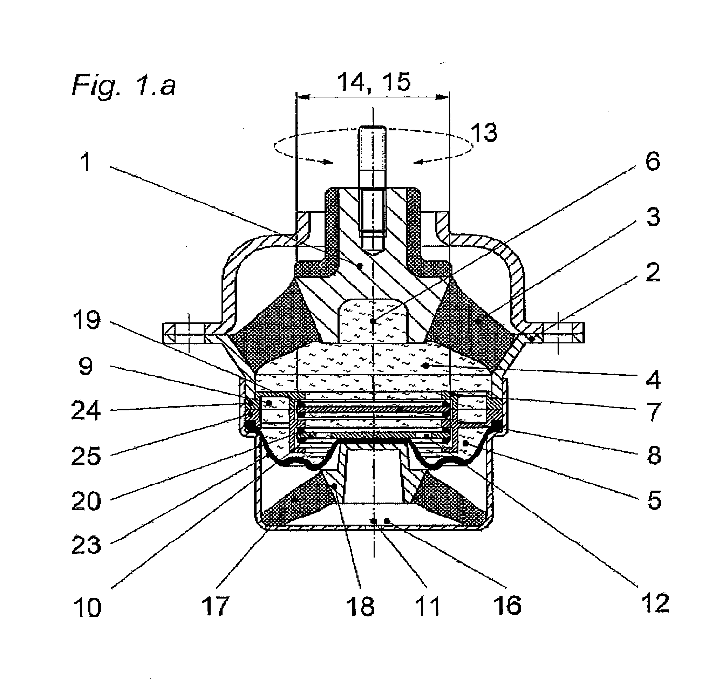

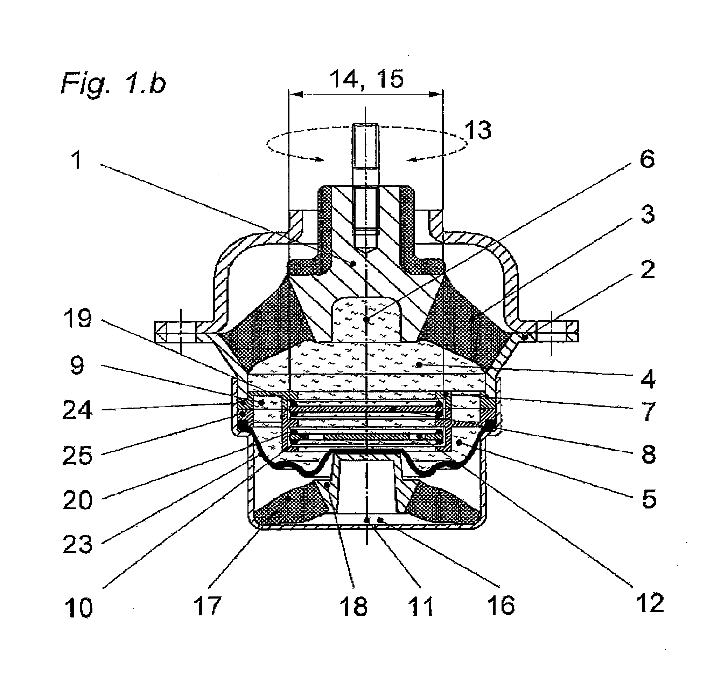

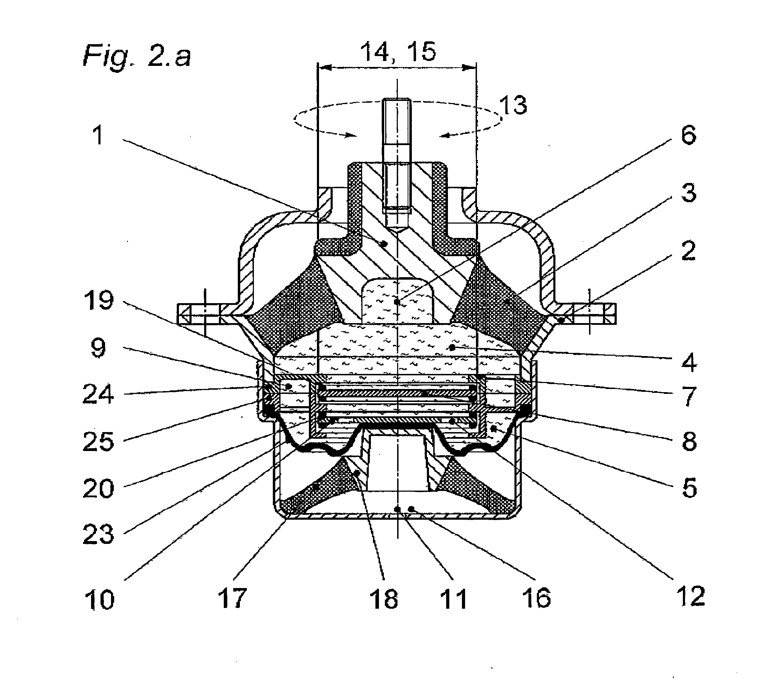

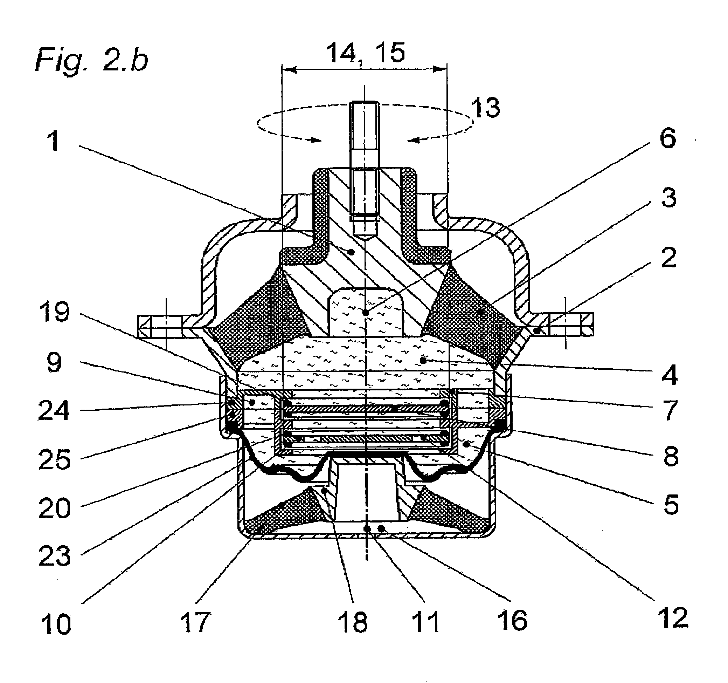

In den Fig. 1 und 2 ist jeweils ein Ausführungsbeispiel eines Hydrolagers gezeigt, wobei sich die gezeigten Hydrolager nur durch die Art ihres pneumatischen Antriebs 16 voneinander unterscheiden. Die Trennplatten 10 sind jeweils im Ausgleichsraum 5 angeordnet.
In Fig. 1 ist der pneumatische Antrieb 16 durch Unterdruck betätigbar.
In Fig. 2 ist der pneumatische Antrieb 16 demgegenüber durch Überdruck betätigbar.

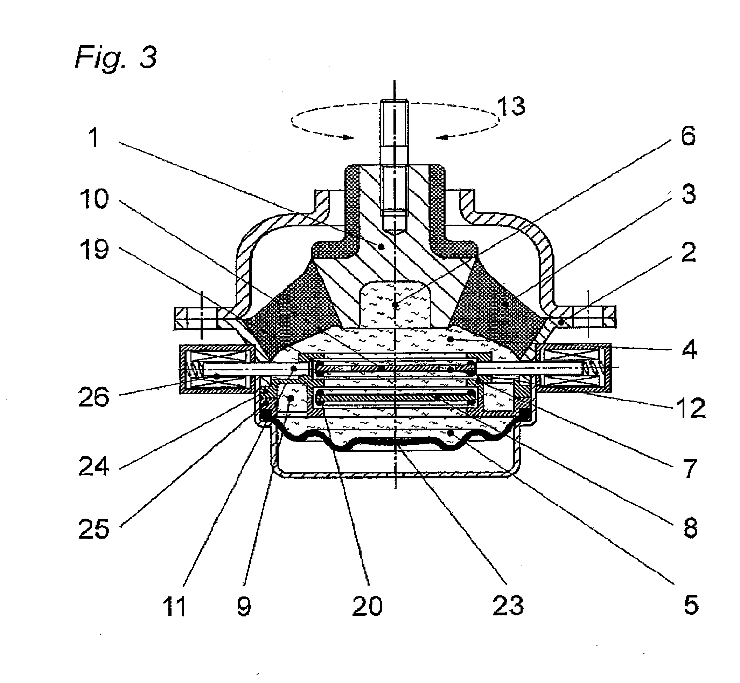

In Fig. 3 umfasst die Schaltvorrichtung 11 einen elektrischen Antrieb 26. Die Trennplatte 10 ist im Arbeitsraum 4 angeordnet. Die Arretierung der Trennplatte 10 erfolgt reibschlüssig.

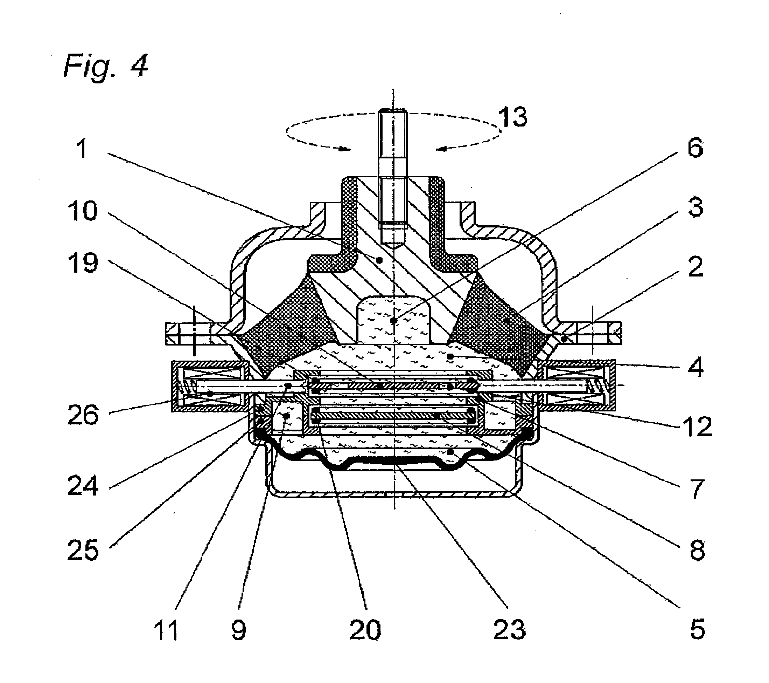

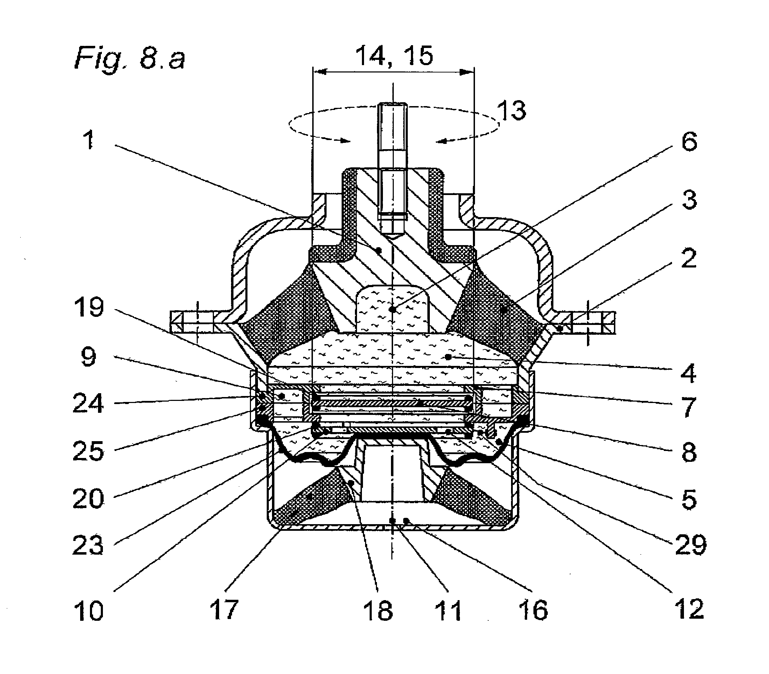

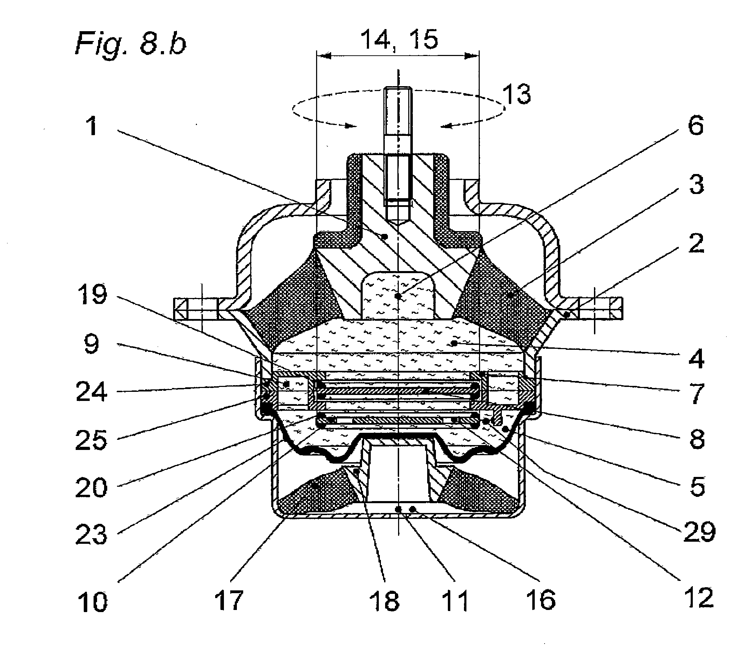

In Fig. 4 ist ein Hydrolager gezeigt, dass sich von dem Hydrolager aus Fig. 3 durch die Art der Arretierung der Trennplatte 10 unterscheidet. Die Arretierung der Trennplatte 10 erfolgt formschlüssig. In Fig.8 ist ein Hydrolager gezeigt, ähnlich den Hydrolagern aus den Fig. 1 und 2, wobei die Trennplatte 10 durch ein elastisches Verbindungselement 29 mit der Trennwand 7 verbunden ist.

In jedem der Ausführungsbeispiele umfasst das Hydrolager ein Traglager 1 und ein Auflager 2, die durch den hohlkegelförmig ausgebildeten Federkörper 3 aufeinander abgestützt sind. Der Federkörper 3 besteht aus einem gummielastischen Werkstoff und begrenzt zusammen mit dem Traglager 1, dem Auflager 2 und der Trennwand 7 den Arbeitsraum 4, der mit einer Dämpfungsflüssigkeit 6 gefüllt ist.

Auf der dem Arbeitsraum 4 axial abgewandten Seiten der Trennwand 7 ist der Ausgleichsraum 5 angeordnet, der ebenfalls mit Dämpfungsflüssigkeit 6 gefüllt ist und durch die Trennwand 7 und die drucklos volumenaufnehmende, rollbalgförmig ausgebildete Abschlussmembran 23 begrenzt ist.

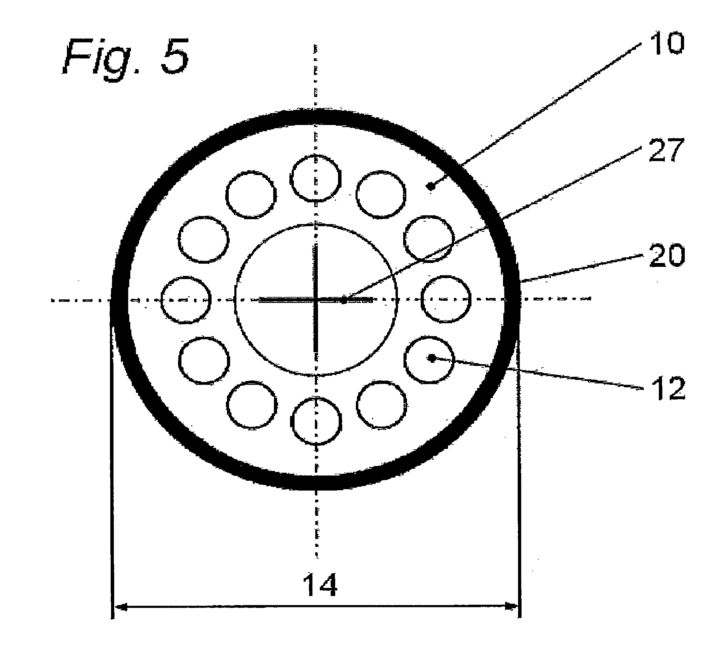

Die Trennwand 7 umfasst eine Vorrichtung zur Isolierung höherfrequenter, kleinamplitudiger Schwingungen und eine Einrichtung zur Dämpfung niederfrequenter großamplitudiger Schwingungen.
Die Vorrichtung zur Isolierung höherfrequenter kleinamplitudiger Schwingungen ist durch die Membran 8 gebildet, die zumindest teilweise aus einem gummielastischen Werkstoff besteht und zwischen einer oberen Düsenscheibe 24 und einer unteren Düsenscheibe 25 schwingfähig zwischen dem Arbeitsraum 4 und dem Ausgleichsraum 5 angeordnet ist. Durch die beiden Düsenscheiben 24, 25 wird die Trennwand 7 gebildet.
Die Membran 8 kann zumindest einen als Überdruckventil ausgebildeten Schlitz 27 aufweisen, durch den unerwünscht hohe Druckdifferenzen zwischen Arbeitsraum 4 und Ausgleichsraum 5 vermieden werden.
Außenumfangsseitig ist die Membran 8 vom Dämpfungskanal 9 umschlossen, der den Arbeitsraum 4 und den Ausgleichsraum 5 flüssigkeitsleitend verbindet. Erfindungsgemäß ist es vorgesehen, dass innerhalb des Arbeitsraums 4 oder des Ausgleichsraums 5 die strömungsführende Trennplatte 10 angeordnet und mittels der Schaltvorrichtung 11 zur Membran 8 funktionstechnisch in Reihe schaltbar ist.
In den Fig. 1, 2 und 8 ist die Trennplatte 10 jeweils im Ausgleichsraum 5, in den Fig. 3 und 4 im Arbeitsraum 4 angeordnet.
Die Trennplatte 10 kann, wie in Fig. 5, 6 und 7 dargestellt, von Durchbrechungen 12 oder Ausnehmungen 28 durchdrungen sein, so dass die Trennplatte 10 von der Dämpfungsflüssigkeit 6 bedarfsweise durchströmbar ist.

Durch das erfindungsgemäße Hydrolager wird eine binäre Schaltfunktion besonders einfach realisiert. Besonders einfach deshalb, weil im Vergleich zu kontinuierlich verstellbaren Hydrolagern auf aufwendige Aktuatoren mit einer Wegregelung, umfassend Motor, Sensor und Regelelektronik, verzichtet werden kann. Für viele Anwendungsfälle ist ein kontinuierlich verstellbares Hydrolager technisch nicht unbedingt erforderlich und aus Gründen der hohen Kosten auch nicht einsetzbar.
Dennoch ist ein Hydrolager wünschenswert, bei dem zusätzlich zu der zuvor beschriebenen Funktion, nämlich der Isolierung höherfrequenter, kleinamplitudiger Schwingungen und der Dämpfung niederfrequenter großamplitudiger Schwingungen, eine Absenkung der dynamischen Steifigkeit des Hydrolagers bei einer Drehzahl der Verbrennungskraftmaschine in einem Drehzahlbereich oberhalb der Leerlaufdrehzahl, zum Beispiel zwischen 3000 und 5000 min-1, durch eine einfache Schaltvorrichtung 11 vorgenommen werden kann.

Die beiden Betriebszustände des erfindungsgemäßen Hydrolagers werden nachfolgend beschrieben:
Fig. 1, 2 und 8:
   Die Trennplatte 10 ist innerhalb des Ausgleichsraums 5 durch die Schaltvorrichtung 11 arretiert, wobei die Schaltvorrichtung 11 einen pneumatischen Antrieb 16, eine Feder 17 und einen Schaltstempel 18 umfasst.
   In jedem der beiden Ausführungsbeispiele ist der pneumatische Antrieb 16 gegen die Federkraft der Feder 17 wirksam. Die Feder 17 besteht aus einem gummielastischen Werkstoff und ist mit dem Schaltstempel 18 verbunden,
   wobei der Schaltstempel 18 zur Betätigung der Trennplatte 10 durch die Schaltvorrichtung 11 bedarfsweise an diese anlegbar oder bedarfsweise von dieser lösbar ist.
Fig. 3 und 4:
   Die Trennplatte 10 ist innerhalb des Arbeitsraums 4 durch die Schaltvorrichtung 11 arretiert, wobei die Schaltvorrichtung 11 einen elektrischen Antrieb 26 umfasst. Der elektrische Antrieb 26 ist in dem hier dargestellten Ausführungsbeispiel durch zwei federvorgespannte Elektromagneten gebildet.
   Durch Einschalten des Stroms kann der Antrieb, bezogen auf die Ausgangsposition, die jeweils andere Schaltstellung anfahren.

Der elektrische Antrieb 26 kann auch aus einem Elektromotor mit Getriebe und einer Spindel zur Erzeugung der Hubbewegung bestehen.

In den hier gezeigten Ausführungsbeispielen ist die Trennplatte 10 mittels der Schaltvorrichtung 11 bis zu einer Frequenz von etwa 100 Hz, das entspricht etwa 3000 min-1 der 4-Zylinder-Verbrennungskraftmaschine, ortsfest an der Trennwand 7 festgelegt.

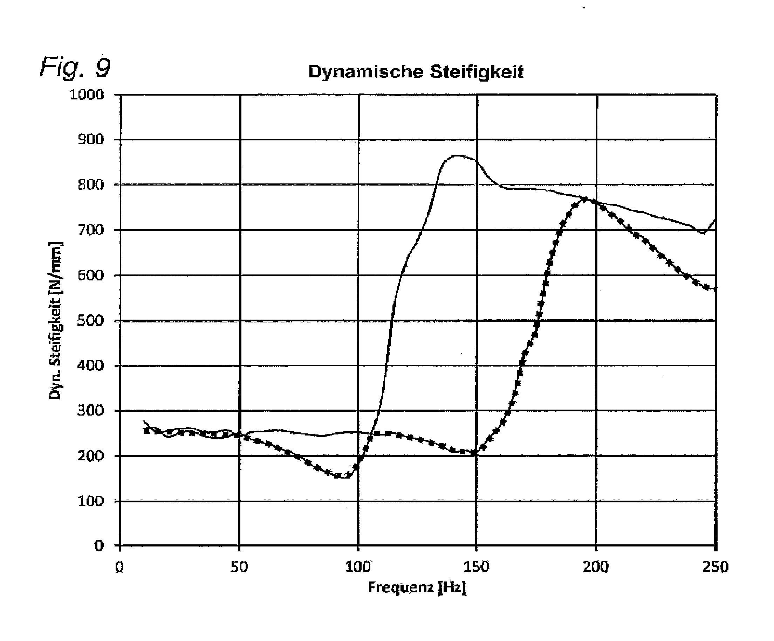

Wie später in Fig. 9 gezeigt, ergibt sich bei niedrigen Frequenzen bis zu einer Frequenz von etwa 100 Hz eine Absenkung der dynamischen Steifigkeit. Durch die dadurch bedingte Weichheit des Hydrolagers werden unangenehme, weil auch akustisch störende Schwingungen vom Fahrzeug isoliert.
Würde die Trennplatte 10 auch bei höheren Frequenzen ortsfest an der Trennwand 7 festgelegt bleiben, würden sich ab etwa 100 Hz ein unerwünscht steiler Anstieg der dynamischen Steifigkeit und damit eine Verhärtung des Lagers ergeben. Um das zu verhindern, wird in unseren Ausführungsbeispielen bei etwa 100 Hz die Schaltvorrichtung 11 betätigt, um die Trennplatte 10 von der Trennwand 7 freizuschalten. Dadurch ist die Trennplatte 10 innerhalb des Ausgleichsraums 5, wie in den Fig. 1, 2 und 8 dargestellt, oder innerhalb des Arbeitsraums 4, wie in den Fig.3 und 4 dargestellt, frei beweglich und praktisch unwirksam.

Im Gegensatz zu dem zuvor beschriebenen, unerwünscht steilen Anstieg der dynamischen Steifigkeit, bleibt die dynamische Steifigkeit durch das Freischalten der Trennplatte 10 von der Trennwand 7 auf einem niedrigen Niveau, zum Beispiel bis zu einer Frequenz, die einer Drehzahl der 4-Zylinder-Verbrennungskraftmaschine von etwa 4500 bis 5000 min-1 entspricht. Aufgrund der geänderten wirksamen Querschnittsfläche und des damit verbundenen geringeren hydraulischen Übersetzungsverhältnisses, ergibt sich eine Absenkung der dynamischen Steifigkeit bei einer höheren Frequenz, die mit den genannten hohen Drehzahlen korreliert.

Bei Fahrzeugen, die überwiegend in einem Drehzahlbereich bis 4500 bis 5000 min-1 gefahren werden, weist das erfindungsgemäße Hydrolager über den gesamten Drehzahlbereich eine nur geringe dynamische Steifigkeit auf, wodurch der Fahrkomfort im Vergleich zu nicht-schaltbaren Hydrolagern signifikant verbessert ist, ohne dass das erfindungsgemäße Hydrolager einen aufwendigen und teuren Aufbau aufweisen würde, wie dies zum Beispiel bei Hydrolagern der Fall ist, die kontinuierlich verstellbar sind.

Entscheidend für die Ausbildung der Tilgerwirkung bei an der Trennwand 7 arretierter Trennplatte 10 und daraus resultierender funktionstechnischer Reihenschaltung der Trennplatte 10 zur Membran 8, ist das sehr hohe hydraulische Übersetzungsverhältnis der Durchbrechungen 12 oder Ausnehmungen 28 in der Trennplatte 10.

Ist die Trennplatte 10, wie zuvor bereits beschrieben, von der Trennwand 7 freigeschaltet und deshalb frei im Ausgleichsraum 5 (Fig. 1, 2 und 8) oder im Arbeitsraum 4 (Fig. 3 und 4) beweglich, ist die Trennplatte 10 quasi unwirksam. Die Funktion des Hydrolagers unterscheidet sich dann nicht von einem nicht-schaltbaren Hydrolager.
Um den Einfluss der freigeschalteten Trennplatte 10 möglichst klein zu halten, weist die Trennplatte 10 ein Gewicht auf, das dem Gewicht der von der Trennplatte 10 verdrängten Dämpfungsflüssigkeit 6 entspricht.

Es ist von Vorteil, dass bei bestehenden Hydrolagem nur andere Trennwände 7 mit der zusätzlichen Trennplatte, 10 benötigt werden, um die guten, zuvor beschriebenen Gebrauchseigenschaften zu erreichen. Die Abmessungen des erfindungsgemäßen Hydrolagers sind sehr kompakt.
Die Herstellung des erfindungsgemäßen Hydrolagers ist einfach und kostengünstig möglich, so dass ein derartiges Hydrolager zum Beispiel auch in Kleinwagen und Fahrzeugen der Mittelklasse zur Anwendung gelangen kann.

In Fig. 1 ist ein erstes Ausführungsbeispiel des erfindungsgemäßen Hydrolagers gezeigt. Der pneumatische Antrieb 16 erfolgt durch Unterdruck.

In Fig. 1 a ist der pneumatische Antrieb 16, der den Unterdruck bereitstellt, ausgeschaltet. Da der pneumatische Antrieb 16 gegen die Federkraft der Feder 17 wirksam ist, drückt die Feder 17 die Trennplatte 10 selbsttätig mittels des Schaltstempels 18 an die Trennwand 7, so dass die Trennplatte 10 innerhalb des Ausgleichsraums 5 an der Trennwand 7 festgelegt und damit arretiert ist. Dieser Betriebszustand wird zum Beispiel bis zu einer Frequenz der eingeleiteten Schwingungen von etwa 100 Hz beibehalten. Bei Überschreitung der etwa 100 Hz schaltet die Schaltvorrichtung 11 und die Trennplatte 10 nimmt die in Fig. 1.b dargestellte Position ein.
Geschaltet wird dadurch, dass der pneumatische Antrieb 16 einen Unterdruck erzeugt, so dass die Feder 17 gegen ihre Federkraft derart bewegt wird, dass die Trennplatte 10 frei innerhalb des Ausgleichsraums 5 beweglich ist. Dargestellt ist das in Fig. 1 b.

In Fig. 2 ist ein Hydrolager gezeigt, das sich vom Ausführungsbeispiel gemäß Fig. 1 nur dadurch unterscheidet, dass der pneumatische Antrieb 16 durch Überdruck betätigbar ist.
Wie in Fig. 2a dargestellt, sind die Feder 17 und der Schaltstempel 18 der Schaltvorrichtung 11 durch den pneumatischen Antrieb 16 mit Überdruck beaufschlagt und arretieren dadurch die Trennplatte 10 an der Trennwand 7.

Wie bereits zu Fig. 1 beschrieben, wird auch hier bei einer Anregungsfrequenz von etwa 100 Hz geschaltet. Der pneumatische Antrieb 16 stellt keinen Überdruck mehr zur Verfügung, so dass auf beiden axialen Seiten der Feder 17 Atmosphärendruck herrscht und die Feder durch die Federkraft ihre in Fig. 2b dargestellte Position einnimmt. Die Feder 17 nimmt auch den Schaltstempel 18 mit. Die Trennplatte 10 ist von der Trennwand 7 gelöst und frei im Ausgleichsraum 5 beweglich.

Das Hydrolager aus Fig. 8 unterscheidet sich nur durch die Art der Festlegung der Trennplatte 10 an der Trennwand 7 von den Hydrolagern aus den Fig. 1 und 2. Ansonsten ist die Funktion gleich. Die Trennplatte 10 ist durch das Verbindungselement 29 elastisch nachgiebig mit der Trennwand 7 verbunden. Dabei umfasst das Verbindungselement 29 drei gleichmäßig in Umfangsrichtung der Trennplatte 10 verteilt angeordnete Stege 30, wobei jeder der Stege 30 einen ersten Anlenkpunkt 31 an der Trennplatte 10 und einen zweiten Anlenkpunkt 32 an der Trennwand 7 hat. Das elastische Verbindungselement 29 hat eine sehr weiche Federkennung, so dass die Beweglichkeit der Trennplatte 10 um ihre axiale Mittellage in ihrem Einbauraum nicht behindert ist.

Ob der pneumatische Antrieb 16 durch Unterdruck, wie in Fig. 1 dargestellt, oder durch Überdruck, wie in Fig. 2 dargestellt, betätigbar ist, hängt generell von den jeweiligen Gegebenheiten des Anwendungsfalles ab, insbesondere davon, welche Art des Drucks im Kraftfahrzeug einfach verfügbar ist.

In den Fig. 3 und 4 ist jeweils ein Ausführungsbeispiel des erfindungsgemäßen Hydrolagers mit einem elektrischen Antrieb 26 gezeigt, der ein Bestandteil der Schaltvorrichtung 11 ist. Die Trennplatte 10 ist im Arbeitsraum 4 angeordnet und durch Betätigung des elektrischen Antriebs 26 zur Membran 8 funktionstechnisch in Reihe schaltbar.
In Fig.3 erfolgt die Arretierung der Trennplatte 10 reibschlüssig.
In Fig. 4 erfolgt die Arretierung der Trennplatte 10 erfolgt formschlüssig.
Im jeweils linken Teil der Darstellung in den Fig. 3 und 4 ist die im Arbeitsraum 4 angeordnete Trennplatte 10 frei innerhalb ihres Einbauraums beweglich. Im jeweils rechten Teil der Darstellung in den Fig. 3 und 4 ist die Trennplatte 10 demgegenüber innerhalb ihres Einbauraums arretiert.

Die Hydrolager können, wie hier dargestellt, als Rundlager oder als Kastenlager ausgebildet sein.

Die Membran 8 und die Trennplatte 10 weisen in den hier dargestellten Ausführungsbeispielen jeweils Anschläge 19, 20 aus gummielastischem Werkstoff auf, die die Membran 8 und die Trennplatte 10 außenumfangsseitig umschließen und als Gleichteile ausgebildet sind.

In Fig. 5 ist ein erstes Ausführungsbeispiel einer Trennplatte 10 in einer Draufsicht gezeigt. Die Durchbrechungen 12 sind als Bohrungen ausgebildet und erstrecken sich gleichmäßig verteilt in Umfangsrichtung. Im Zentrum der Trennplatte 10 kann ein Überdruckventil in Form eines Schlitzes 27 angeordnet sein, um unerwünscht hohe Druckdifferenzen zwischen dem Arbeitsraum 4 und dem Ausgleichsraum 5 zu vermeiden.

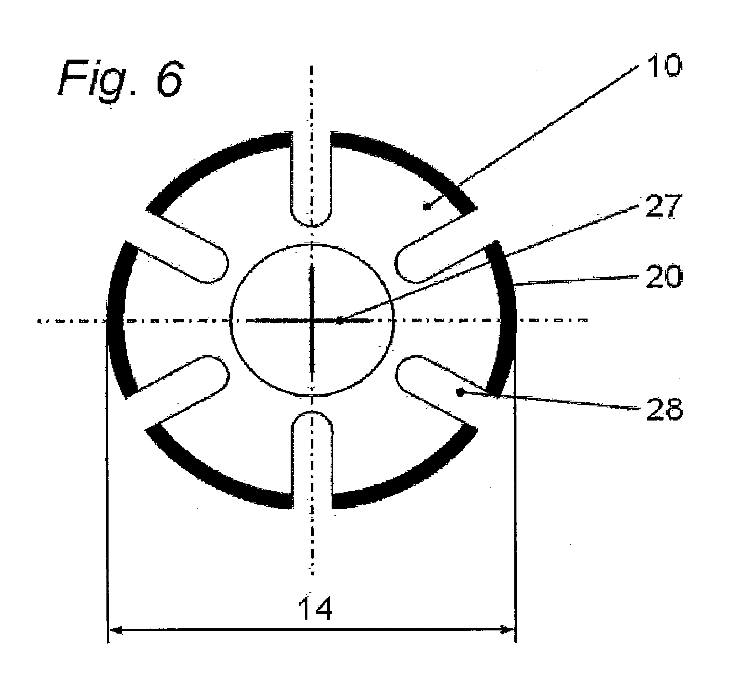

In Fig. 6 ist ein zweites Ausführungsbeispiel einer Trennplatte 10 in einer Draufsicht gezeigt. Am Außenumfang der Trennplatte 10 sind sich in radialer Richtung erstreckender Ausnehmungen 28 gleichmäßig in Umfangsrichtung verteilt angeordnet. Auch bei diesem Ausführungsbeispiel kann im Zentrum der Trennplatte 10 ein Schlitz 27 als Überdruckventil angeordnet sein, um unerwünscht hohe Differenzdrücke zwischen Arbeitsraum 4 und Ausgleichsraum 5 zu vermeiden.

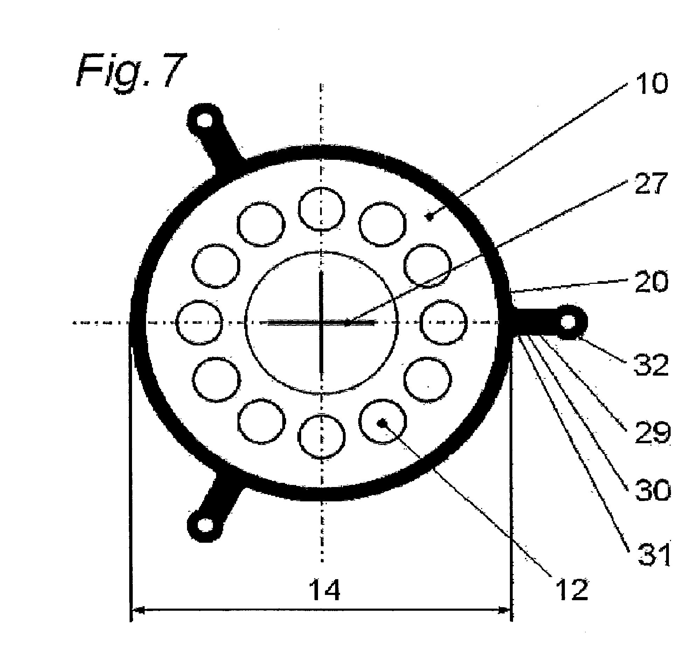

In Fig. 7 ist ein drittes Ausführungsbeispiel einer Trennplatte 10 in einer Draufsicht gezeigt. Das elastische Verbindungselement 29, durch das die Trennplatte 10 mit der Trennwand 7, wie in Fig. 8 dargestellt, verbunden ist, umfasst die Stege 30, wobei der erste Anlenkpunkt 31 der Stege 30 an der Trennplatte 10 und der zweite Anlenkpunkt 32 an der Trennwand 7 festgelegt ist.

In Fig. 9 ist ein Diagramm der Hydrolager aus den Fig. 1, 2, 3, 4 und 8 gezeigt. Die dynamische Steifigkeit der Hydrolager ist über der Frequenz aufgetragen.

Die Kurve mit den Quadraten zeigt die dynamische Steifigkeit über der Frequenz der erfindungsgemäßen Hydrolager, die beiden durchgezogenen dünnen Kurve die dynamische Steifigkeit über der Frequenz eines konventionellen, nicht-schaltbaren ersten Hydrolagers mit zwei unterschiedlichen, fest eingestellten Abstimmungsvarianten.

Ab Leerlaufdrehzahl bis zu einer Drehzahl von etwa 3000 min-1, die einer Frequenz von etwa 100 Hz entspricht, ist die Trennplatte 10 durch die Schaltvorrichtung 11 ortsfest an die Trennwand 7 angepresst. Die Dämpfungsflüssigkeit 6 strömt bei Schwingungen der Membran 8 durch die Durchbrechungen 12 oder Ausnehmungen 28 der Trennplatte 10, so dass sich eine Tilgerwirkung ergibt, die für eine Absenkung der dynamischen Steifigkeit bis zur Schaltfrequenz sorgt.

Um ab der Schaltfrequenz eine unerwünschte Erhöhung der dynamischen Steifigkeit zu verhindern, wird die Trennplatte 10 mittels der Schaltvorrichtung 11 aus ihrer Arretierung an der Trennwand 7 gelöst und ist anschließend frei innerhalb des Ausgleichsraums 5 (Fig. 1, 2 und 8) oder des Arbeitsraums 4 (Fig. 3 und 4) beweglich;

Dadurch wird erreicht, dass die dynamische Steifigkeit des erfindungsgemäßen Hydrolagers von der Leerlaufdrehzahl der Verbrennungskraftmaschine durchgängig bis zu einem Frequenzbereich von zumindest 150 Hz niedrig ist. Störende Schwingungen werden dadurch über den gesamten Frequenzbereich unterdrückt und von der Karosserie eines Kraftfahrzeugs, in dem das Hydrolager zur Anwendung gelangt, ferngehalten.

Die Schaltung des Hydrolagers erfolgt derart, dass von den beiden Kurven, die sich in den Schaltzuständen ergeben, immer die niedrigere eingestellt wird. Dadurch wird sichergestellt, dass das Hydrolager stets die niedrigere Steifigkeit aufweist.

Ein weiterer Vorteil ist, dass das Hydrolager des im Frequenzbereich niedriger liegenden Minimums der dynamischen Steifigkeit durch die Anzahl und Größe der Durchbrechungen 12 oder der Ausnehmungen 28 in der Trennplatte 10 im Frequenzbereich nach oben (größere Flächen) oder nach unten (kleinere Flächen) verschoben werden kann und damit das Hydrolager auf bezüglich der Fahrzeuginnenraum-Akustik kritische Drehzahlen und Frequenzbereiche abgestimmt werden kann.

Auch eine Abstimmung des oberen Tilgerpunkts ist durch die Querschnittsfläche der Membran und des zugehörigen strömungführenden Kanals abstimmbar.
In dem Schaltzustand, in dem die Trennplatte frei beweglich und damit quasi unwirksam ist, bildet sich in bekannter Weise eine Resonanzschwingung der Masse der Dämpfungsflüssigkeit in dem Bereich um die Membran 8 herum aus. Auch dort kann die Frequenz der Absenkung der dynamischen Steifigkeit durch eine Änderung der Querschnittsfläche oder der Lage des Bereichs um die Membran 8 angepasst werden.
Legt man nun bei dem erfindungsgemäßen Hydrolager die Querschnittsfläche der Membran 8 nicht im verfügbaren Bauraum maximal aus, sondern reduziert bewusst diese Fläche, zum Beispiel auch durch eine Reihenschaltung mit einer weiteren Querschnittsverengung ober- oder unterhalb der Membran 8, so kann auch die Frequenz mit dem dynamischen Steifigkeitsminimum in dem Zustand "freigeschaltete Trennplatte" an die Gegebenheiten des Fahrzeugs angepasst werden. Das ist insbesondere dann vorteilhaft, wenn dieses Minimum bei einer bestimmten Frequenz dringend benötigt wird,

Zusammenfassend kann festgestellt werden, dass die Kennung des erfindungsgemäßen Hydrolagers zwei weitgehend beliebig im Frequenzbereich einstellbare Minima in der dynamischen Steifigkeit hat und dass diese Kennung komplementär zur Innenraumakustik des Fahrzeugs eingestellt werden kann. Das heißt, bei den Frequenzen, bei denen es im Fahrzeug am lautesten ist, wird beim Hydrolager die minimale dynamische Steifigkeit eingestellt.

### Dazu ein Beispiel:

Ein 4-Zylinder Dieselmotor hat beispielsweise eine maximale Drehzahl von 4500 1/min. Aufgrund von Strukturresonanzen im Fahrzeug sind Frequenzbereiche von 70 und 120 Hz auffällig, wohingegen das Innenraumgeräusch bei 150 Hz unkritisch ist. In Drehzahlen übersetzt bedeutet dies, dass das Fahrzeug bei 2100 1/min und bei 3600 1/min besonders schlecht ist, bei 4500 1/min jedoch unauffällig oder sogar unempfindlich.

Obwohl es der Bauraum erlauben würde, stimmt man das erfindungsgemäße Hydrolager nun nicht auf 70 und 150 Hz ab, sondern legt das obere Steifigkeitsminimum durch eine bewusste lokale Verengung des Strömungsquerschnitts dicht oberhalb oder unterhalb der Membran 8, bevorzugt integriert in die Trennwand 7, auf 120 Hz, um dort die geringere dynamische Steifigkeit gezielt einzusetzen.

## Patentansprüche

1. Hydrolager, umfassend ein Traglager (1) und ein Auflager (2), die durch einen im Wesentlichen hohlkegelförmig ausgebildeten Federkörper (3) aus gummielastischem Werkstoff aufeinander abgestützt sind und einen Arbeitsraum (4) und einen Ausgleichsraum (5) begrenzen, die mit Dämpfungsflüssigkeit (6) gefüllt und auf ihren einander axial zugewandten Seiten durch eine Trennwand (7) voneinander getrennt sind, wobei die Trennwand (7) zur Isolierung höherfrequenter kleinamplitudiger Schwingungen eine Membran (8) umfasst, die schwingfähig zwischen Arbeitsraum (4) und Ausgleichsraum (5) angeordnet ist, wobei der Arbeitsraum (4) und der Ausgleichsraum (5) zur Dämpfung niederfrequenter großamplitudiger Schwingungen durch einen Dämpfungskanal (9) flüssigkeitsleitend miteinander verbunden sind, **dadurch gekennzeichnet, dass** innerhalb des Arbeitsraums (4) oder des Ausgleichsraumes (5) eine strömungsführende Trennplatte (10) angeordnet und mittels einer Schaltvorrichtung (11) zur Membran (8) funktionstechnisch in Reihe schaltbar ist.

2. Hydrolager nach Anspruch 1, **dadurch gekennzeichnet, dass** die Trennplatte (10) von Durchbrechungen (12) durchdrungen ist und dass die Durchbrechungen (12) von der Dämpfungsflüssigkeit (6) durchströmbar sind.

3. Hydrolager nach Anspruch 2, **dadurch gekennzeichnet, dass** die Durchbrechungen (12) gleichmäßig verteilt in der Trennplatte (10) angeordnet sind.

4. Hydrolager nach einem der Ansprüche 1 bis 3, **dadurch gekennzeichnet, dass** die Trennplatte (10) ein Gewicht aufweist, das dem Gewicht der von der Trennplatte (10) verdrängten Dämpfungsflüssigkeit (6) im Wesentlichen entspricht.

5. Hydrolager nach einem der Ansprüche 1 bis 4, **dadurch gekennzeichnet, dass** die Trennplatte (10) und die Membran (8) einen im Wesentlichen übereinstimmenden Durchmesser (14, 15) aufweisen.

6. Hydrolager nach einem der Ansprüche 1 bis 5, **dadurch gekennzeichnet, dass** die Trennplatte (10) mittels der Schaltvorrichtung (11) im Arbeitsraum (4) oder im Ausgleichsraum (5) bedarfsweise arretierbar ist.

7. Hydrolager nach einem der Ansprüche 1 bis 6, **dadurch gekennzeichnet, dass** die Trennplatte (10) durch zumindest ein elastisches Verbindungselement (29) mit der Trennwand (7) verbunden ist.

8. Hydrolager nach Anspruch 7, **dadurch gekennzeichnet, dass** das Verbindungselement (29) zumindest drei über den Umfang der Trennplatte (10) angeordnete Stege (30) umfasst, deren erster Anlenkpunkt (31) an der Brennplatte (10) und deren zweiter Anlenkpunkt (32) an der Trennwand (7) festgelegt ist.

9. Hydrolager nach Anspruch 8, **dadurch gekennzeichnet, dass** die Stege (30) eine sehr weiche Federkennung aufweisen, derart, dass die Beweglichkeit der Trennplatte (10) um ihre axiale Mittellage in ihrem Einbauraum nicht behindert ist.

10. Hydrolager nach einem der Ansprüche 1 bis 9, **dadurch gekennzeichnet, dass** die Trennplatte (10) mittels der Schaltvorrichtung (11) ortsfest an der Trennwand (7) festlegbar ist.

11. Hydrolager nach einem der Ansprüche 1 bis 10, **dadurch gekennzeichnet, dass** die Trennplatte (10) mittels der Schaltvorrichtung (11) im Arbeitsraum (4) oder im Ausgleichsraum (5) bedarfsweise freischaltbar ist.

12. Hydrolager nach einem der Ansprüche 1 bis 11, **dadurch gekennzeichnet, dass** die Trennplatte (10) und die Schaltvorrichtung (11) im Ausgleichsraum (5) angeordnet sind und dass die Schaltvorrichtung (11) einen pneumatischen Antrieb (16), eine Feder (17) und einen Schaltstempel (18) umfasst.

13. Hydrolager nach Anspruch 12, **dadurch gekennzeichnet, dass** der pneumatische Antrieb (16) gegen die Federkraft der Feder (17) wirksam ist.

14. Hydrolager nach einem der Ansprüche 12 oder 13, **dadurch gekennzeichnet, dass** der Schaltstempel (18) und die Feder (17) miteinander verbunden sind und dass der Schaltstempel (18) zur Schaltung der Trennplatte (10) durch die Schaltvorrichtung (11) an diese anlegbar oder von dieser lösbar ist.

15. Hydrolager nach einem der Ansprüche 12 bis 14, **dadurch gekennzeichnet, dass** der pneumatische Antrieb (16) durch Unterdruck betätigbar ist.

16. Hydrolager nach einem der Ansprüche 12 bis 15, **dadurch gekennzeichnet, dass** der Schaltstempel (18) durch Betätigung der Schaltvorrichtung (11) von der Trennplatte (10) lösbar ist.

17. Hydrolager nach einem der Ansprüche 12 bis 14, **dadurch gekennzeichnet, dass** der pneumatische Antrieb (16) durch Überdruck betätigbar ist.

18. Hydrolager nach Anspruch 17, **dadurch gekennzeichnet, dass** der Schaltstempel (18) durch Betätigung der Schaltvorrichtung (11) an die Trennplatte (10) anlegbar ist.

19. Hydrolager nach einem der Ansprüche 12 bis 18, **dadurch gekennzeichnet, dass** die Feder (17) aus einem elastomeren Werkstoff besteht und bei arretierter Trennplatte (10) im Wesentlichen hohlkegelförmig ausgebildet ist.

20. Hydrolager nach einem der Ansprüche 1 bis 19, **dadurch gekennzeichnet, dass** die Schaltvorrichtung (11) einen elektrischen Antrieb (26) umfasst.

21. Hydrolager nach einem der Ansprüche 1 bis 20, **dadurch gekennzeichnet, dass** die Membran (8) und/oder die Trennplatte (10) jeweils einen Anschlag (19, 20) aus gummielastischem Werkstoff aufweisen.

22. Hydrolager nach Anspruch 21, **dadurch gekennzeichnet, dass** die Anschläge (19, 20) von Membran (8) und/oder Trennplatte (10) jeweils außenumfangsseitig angeordnet sind.

23. Hydrolager nach einem der Ansprüche 21 oder 22, **dadurch gekennzeichnet, dass** zumindest die außenumfangsseitigen Anschläge (19, 20) von Membran (8) und Trennplatte (10) als Gleichteile ausgebildet sind.
